# FASCICULE DE BREVET EUROPEEN

(11) **EP 3 673 311 B1**
(45) Date de publication et mention de la délivrance du brevet: **07.07.2021**
(21) Numéro de dépôt: 18758610.2
(22) Date de dépôt: 21.08.2018
(51) Int. Cl.: G02B 7/182, G02B 23/16

(54) **TELESCOPE A MONTAGE SIMPLIFIE**
TELESKOP MIT VEREINFACHTER MONTAGE
TELESCOPE WITH SIMPLIFIED MOUNTING

(30) Priorité: 22.08.2017 FR 1700867
(43) Date de publication de la demande: 01.07.2020
(73) Titulaire: Safran Electronics & Defense, 75015 Paris (FR)
(72) Inventeur: HOELTZEL, Charlotte, 75015 PARIS (FR); TACCONI, Cédric, 75015 PARIS (FR); FURUI, Christophe, 75015 PARIS (FR); SEILLIER, Franck, 75015 PARIS (FR); ANNA, Guillaume, 75015 PARIS (FR)
(74) Mandataire: Lavialle, Bruno François Stéphane
(86) Numéro de dépôt international: PCT/EP2018/072585
(87) Numéro de publication internationale: WO 2019/038300

(56) Documents cités:
- WO-A1-2015/036666
- US-A1- 2005 183 377
- US-A1- 2013 208 367
- US-A1- 2017 090 178

## Description

La présente invention concerne le domaine de l'optique et plus particulièrement un télescope utilisable pour l'observation et la visée.

### ETAT DE LA TECHNIQUE

Un télescope comprend un bâti portant un miroir primaire et un miroir secondaire maintenu en regard du miroir primaire par un support de telle manière que le miroir primaire renvoie le flux lumineux vers le miroir secondaire qui le renvoie à son tour vers un oculaire. Le bâti comporte une platine de fixation du miroir primaire de manière à maintenir en position, par rapport à l'oculaire, l'ensemble miroir primaire, support, miroir secondaire sans engendrer de contraintes mécaniques sur le miroir primaire.

Il existe de nombreux types de télescope et notamment les télescopes de Newton et les télescopes de Cassegrain. Dans les télescopes de Cassegrain et apparentés (Schmidt Cassegrain, Maksutov Cassegrain), le miroir primaire est percé en son centre pour laisser passer le flux lumineux renvoyé par le miroir secondaire vers un oculaire disposé derrière le miroir primaire
FR3010537A1 décrit un exemple de télescope de l'art antérieur.

Dans les télescopes utilisés dans les systèmes d'observation et de visée embarqués sur les véhicules, l'oculaire est remplacé par un capteur relié à un dispositif de visualisation monté dans le poste de conduite du véhicule.

La qualité du télescope dépend du positionnement relatif des miroirs et des déformations subies par les miroirs.

Les variations thermiques occasionnent des dilatations des composants du télescope. Lorsque ces composants ont des propriétés thermiques différentes, une même variation de température entraine des dilatations différentes des composants du télescope. Ces dilatations différentielles engendrent des contraintes sur les composants et donc des déformations de ceux-ci.

Il importe donc de limiter ces dilatations différentielles, notamment en choisissant des matériaux ayant des propriétés thermiques proches, ou l'influence de ces dilatations différentielles, notamment par les formes du bâti et du support.

### OBJET DE L'INVENTION

Un but de l'invention est de limiter les dilatations différentielles.

### BREF EXPOSE DE L'INVENTION

A cet effet, on prévoit un télescope comprenant une platine de fixation, un miroir primaire porté par une face avant de la platine, et un miroir secondaire maintenu en regard du miroir primaire par un support.

Selon une première caractéristique de l'invention, le miroir primaire est relié à la platine par des éléments de fixation ayant chacun une base fixée à la platine et, à l'opposé de la base, un palier qui est logé entre une première portion arrière et une deuxième portion arrière du miroir primaire et qui reçoit un troisième tronçon d'un axe ayant un premier tronçon et un deuxième tronçon reçus respectivement dans un premier perçage et un deuxième perçage qui sont ménagés dans la première portion arrière et la deuxième portion arrière respectivement. Le troisième tronçon est reçu dans le palier avec un ajustement glissant et est collé dans le palier au moyen d'une colle structurale et l'axe est pourvu d'un canal central ayant une première extrémité débouchant sur une partie de l'axe accessible lorsque l'axe est en position dans les perçages pour recevoir une extrémité d'une canule d'injection de colle et une deuxième extrémité débouchant dans au moins un canal transversal dont au moins une extrémité débouche sur une surface externe du troisième tronçon.

La quantité de colle étant limitée, l'influence d'une dilation de celle-ci sous l'effet de variation thermique est faible de sorte que la colle n'engendre pas sur le miroir primaire une contrainte suffisante pour provoquer une déformation du miroir primaire.

Selon une deuxième caractéristique de l'invention, le support comprend une couronne primaire montée autour du miroir primaire, une couronne secondaire montée autour du miroir secondaire, et des bras reliant la couronne secondaire à la couronne primaire.

Avantageusement, le support comprend un moyen de découplage mécanique du miroir secondaire vis-à-vis du miroir primaire et, de préférence, la couronne secondaire comprend une couronne externe et une couronne interne coaxiale à la couronne externe et reliée à celle-ci par des éléments de découplage mécanique symétriquement répartis.

Avantageusement alors, le miroir secondaire est reçu avec jeu dans la couronne interne et est collé dans celle-ci au moyen d'une colle structurale; la couronne externe comprenant des troisièmes perçages traversant et la couronne interne comprenant des quatrièmes perçages traversant sensiblement alignés avec les troisièmes perçages pour permettre l'introduction d'une canule d'injection de colle.

La présence d'un moyen de découplage mécanique comme l'agencement de la couronne secondaire du support permet de limiter la transmission des vibrations au miroir secondaire, ce qui améliore de manière importante les performances du télescope en particulier lorsque celui-ci est embarqué sur un véhicule.

Selon une troisième caractéristique de l'invention, le support comprend une couronne primaire montée autour du miroir primaire, une couronne secondaire montée autour du miroir secondaire, et des bras reliant la couronne secondaire à la couronne primaire. Alternativement ou cumulativement :
- les bras ont une première extrémité adjacente à la couronne primaire et une deuxième extrémité adjacente à la couronne secondaire, la première extrémité s'étendant radialement par rapport à la couronne primaire et la deuxième extrémité s'étendant tangentiellement par rapport à la couronne secondaire ;
- les bras sont incurvés vers le miroir primaire ;
- chaque bras a une section transversale qui varie entre les extrémités de telle manière que, pour un effort donné générant des contraintes dans le bras, les contraintes sont réparties de manière équivalente le long du bras.

Les bras permettent alors de maintenir le miroir secondaire en position par rapport au miroir primaire, en limitant, grâce à l'un au moins des agencements indiqués ci-dessus, d'une part, la transmission des vibrations au miroir secondaire et, d'autre part, de limiter la zone du miroir primaire qui est masquée par les bras vis-à-vis d'un flux lumineux incident.

Selon une quatrième caractéristique de l'invention, le télescope est de type Cassegrain et la platine a une surface arrière comportant des références de positionnement du télescope par rapport à un dispositif de capture d'image disposé en regard de la face arrière.

Avantageusement alors, les références de positionnement sont obtenues par un usinage de qualité optique et comprennent une face perpendiculaire à un axe optique du télescope pour former une référence d'inclinaison, un alésage central pour former une référence de centrage et un usinage concave en calotte sphérique ayant un centre sur l'axe optique pour définir une distance du capteur par rapport au miroir secondaire.

Avantageusement encore le miroir secondaire comprend en regard du miroir primaire une portion centrale pourvue d'au moins une gravure de centrage du miroir secondaire par rapport au miroir primaire.

Ceci permet de faciliter le positionnement du dispositif de capture d'image par rapport au télescope et le positionnement du miroir secondaire par rapport au miroir primaire.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue schématique d'un télescope selon l'invention ;

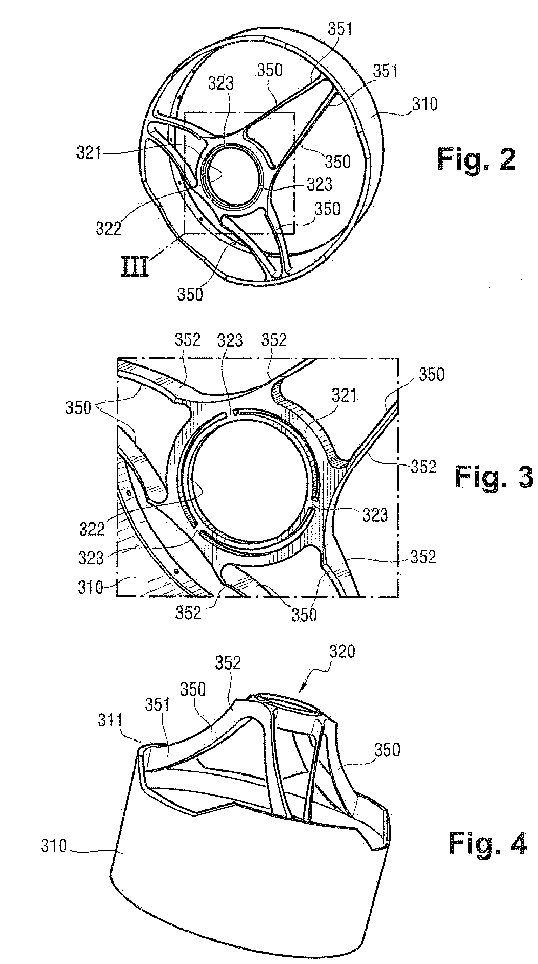

- la figure 2 est une vue en perspective du support seul selon un premier angle de vue ;
- la figure 3 est une vue agrandie d'une zone centrale de la figure 2 ;
- la figure 4 est une vue en perspective du support du miroir secondaire selon un deuxième angle de vue ;

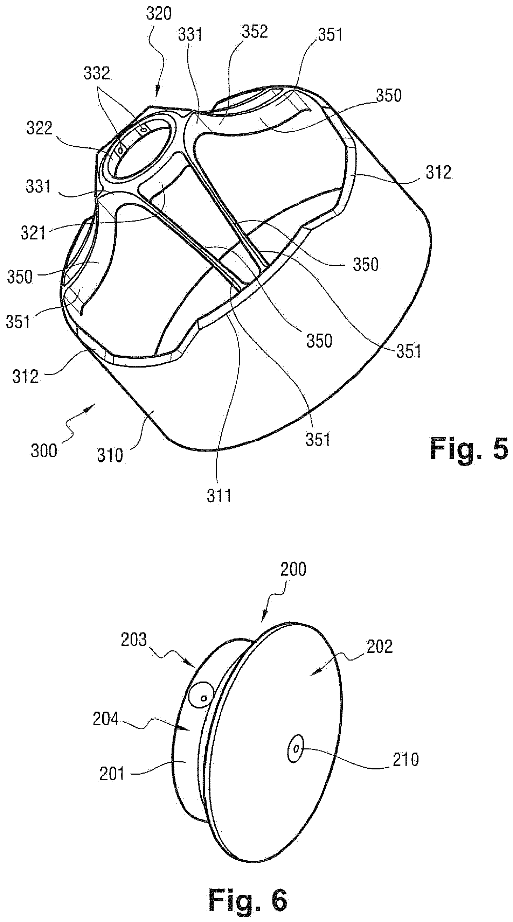

- la figure 5 est une vue en perspective de ce support selon un troisième angle de vue ;
- la figure 6 est une vue en perspective du miroir secondaire seul ;
- la figure 7 est une vue partielle en coupe selon le plan VII de la figure 1 ;
- la figure 8 est une vue de détail de la figure 7 ;

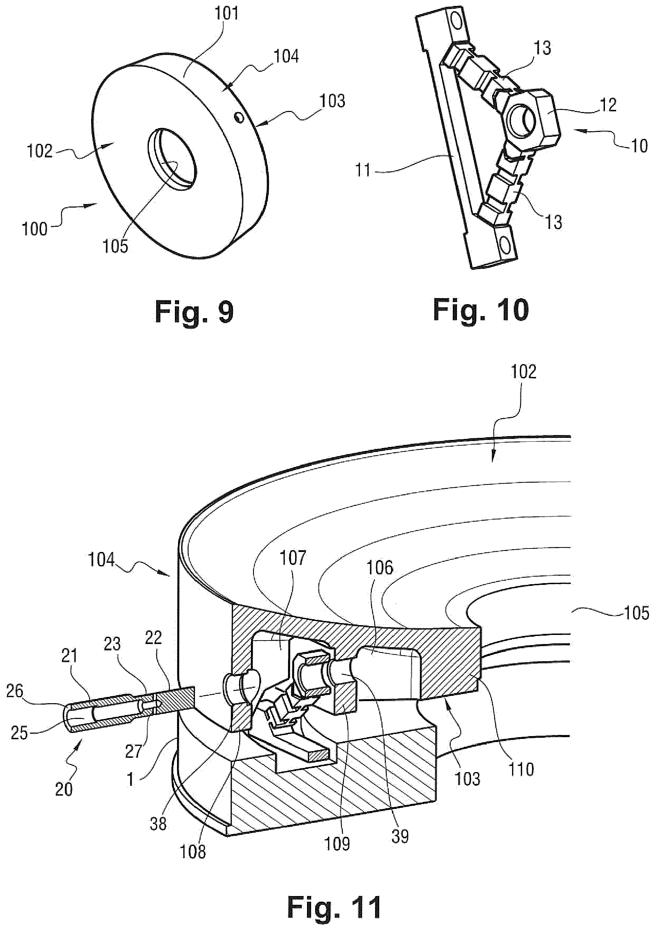

- la figure 9 est une vue en perspective du miroir primaire seul ;
- la figure 10 est une vue d'un élément de fixation du miroir primaire sur la platine ;

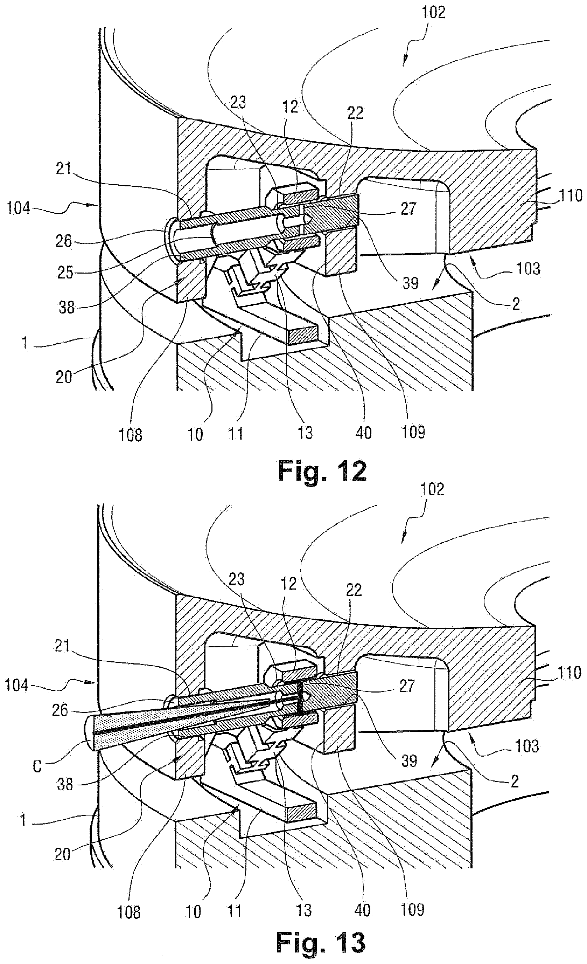

- les figures 11 à 13 sont des vue partielles en perspective et en coupe montrant le montage du miroir primaire sur la platine.

### DESCRIPTION DETAILLEE DE L'INVENTION

L'invention est ici décrite en application avec un télescope de type Maksutov Cassegrain.

En référence aux figures, le télescope selon l'invention comprend :
- un miroir primaire,
- un miroir secondaire,
- un support maintenant le miroir secondaire et le miroir primaire l'un en face de l'autre.

Le miroir primaire, le miroir secondaire et le support portent respectivement les références générales 100, 200, 300 sur les figures.

Le miroir primaire 100 comprend un corps de révolution 101 ayant un axe central sur lequel sont centrées une surface réfléchissante 102, une face de référence 103 opposée à la surface réfléchissante 102, une surface périphérique 104 de forme cylindrique, et un alésage central 105 débouchant sur la surface réfléchissante 102 et la face de référence 103. La surface réfléchissante 102 a une forme de calotte asphérique concave. La face de référence 103 comprend plusieurs, ici deux, rainures 106, 107, de forme circulaire et de section transversale rectangulaire, qui sont centrées sur l'axe central et qui délimitent une portion annulaire externe 108, une portion annulaire intermédiaire 109 et une portion annulaire interne 110. La rainure 106 est plus proche de l'axe central que la rainure 107. Les rainures 106, 107 permettent d'alléger le miroir primaire 100 tandis que les portions 108, 109, 110 forment des nervures de rigidification de la surface réfléchissante 102.

Le miroir secondaire 200 comprend un corps de révolution 201 ayant un axe central sur lequel sont centrées une surface réfléchissante 202, une face 203 opposée à la surface réfléchissante 202, et une surface périphérique 204 de forme cylindrique. La surface réfléchissante 202 a une forme de calotte asphérique convexe qui fait face à la surface réfléchissante 102 du miroir primaire 100. L'axe central du miroir secondaire 200 est aligné sur l'axe central du miroir primaire 100 pour définir l'axe optique A du télescope.

Le miroir primaire 100, le miroir secondaire 200 et le support 300 sont ici en aluminium.

Le miroir primaire 100 est monté sur une platine de fixation, généralement désignée en 1, sur laquelle est fixé le support 300.

Le support 300 comprend une couronne primaire 310 montée sur la platine de fixation 1 pour s'étendre autour du miroir primaire 100, une couronne secondaire 320 montée autour du miroir secondaire 200, et des bras 350 reliant la couronne secondaire 320 à la couronne primaire 310. Le support 300 est ici d'une seule pièce.

La couronne primaire 310 s'étend autour du miroir primaire 1 sans le toucher et comprend un bord 313 enserrant la platine de fixation 1 pour assurer sa fixation à la platine de fixation 1. La couronne primaire 310 est ici fixée à la platine de fixation 1 par collage au moyen d'une colle structurale ici une colle époxy. A l'opposé, la couronne primaire 310 a un bord 311 s'étendant en saillie du miroir primaire 100 du côté du miroir secondaire 200 et le bord 311 est pourvu d'échancrures 312 permettant de limiter au maximum la partie de la couronne primaire 310 qui s'étend en saillie du miroir primaire 100 et qui risque d'intercepter un flux lumineux secondaire orienté vers le miroir primaire 100.

Les bras 350 ont une première extrémité 351 se raccordant à la couronne primaire 310 sensiblement radialement et une deuxième extrémité 352 se raccordant à la couronne secondaire 320 sensiblement tangentiellement. Les bras 350 sont agencés en trois paires positionnées à 120° les unes des autres. Les premières extrémités 351 sont solidaires de la surface interne 313 de la partie de la couronne primaire 310 s'étendant en saillie de la surface réfléchissante 102, au niveau des portions non échancrées. Les bras 350 de chaque paire divergent l'un de l'autre de sorte que la deuxième extrémité 352 de chacun des bras 350 d'une paire vient quasiment rejoindre la deuxième extrémité 352 du bras 350 adjacent appartenant une autre paire de bras 350.

Les bras 350 sont incurvés vers le miroir primaire 100. Chaque bras 350 a une section transversale qui varie entre les extrémités 351 et 352 de telle manière que, pour un effort donné générant des contraintes dans la branche, les contraintes sont réparties de manière équivalente le long du bras 350. La section transversale a ici une forme rectangulaire ayant un grand axe parallèle à l'axe optique A.

Les bras 350 sont ainsi agencés de manière à :
- avoir une raideur et une résistance aux contraintes suffisantes pour limiter la transmission de l'énergie vibratoire vers le miroir secondaire 200,
- avoir une surface projetée sur le miroir primaire 100 réduite pour limiter l'ombre projetée par les bras 350 sur le miroir primaire 100.

Le support 300 comprend un moyen de découplage mécanique du miroir secondaire 200 vis-à-vis du miroir primaire 100.

La couronne secondaire 320 comprend une couronne externe 321 à laquelle se raccordent les deuxièmes extrémités 352 des bras 350 et une couronne interne 322 coaxiale à la couronne externe 321 et reliée à celle-ci par des éléments de découplage mécanique symétriquement répartis. Les éléments de découplage mécanique sont ici formés de trois lames élastiques 323 s'étendant radialement entre la couronne externe 321 et la couronne interne 322. Les lames élastiques 323 sont disposées à 120° de sorte que chaque lame élastique 323 soit positionnée symétriquement entre deux paires de bras 350. Chaque lame élastique 323 est agencée pour être relativement rigide dans une direction parallèle à l'axe optique A mais relativement souple dans une direction circonférentielle de la couronne secondaire 200.

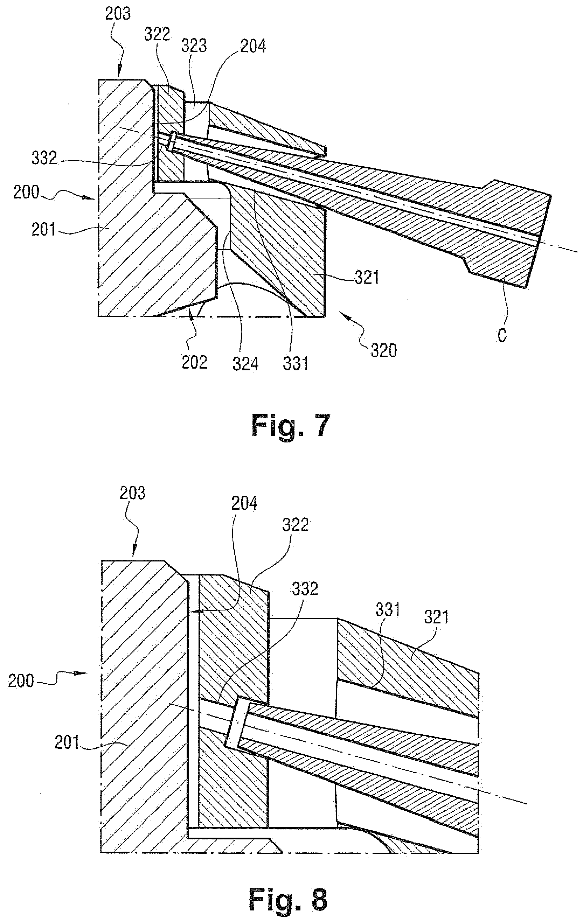

La couronne externe 321 comprend des troisièmes perçages 331 traversant et la couronne interne 322 comprend des quatrièmes perçages 332 traversant qui sont sensiblement alignés avec les perçages 331. Chaque perçage 331 et le perçage 332 qui est aligné avec lui forment une paire de perçages permettant l'introduction d'une canule C d'injection de colle depuis l'extérieur de la couronne externe 321. Le perçage 331 est agencé pour guider la canule vers le perçage 332. Chaque perçage 332 est étagé pour former une butée à l'enfoncement de la canule dans le perçage 332 et est agencé pour assurer une liaison étanche avec la canule C. A cette fin, la canule C est de forme conique et chaque perçage 332 a un tronçon d'entrée ayant un diamètre légèrement inférieur au diamètre de l'extrémité de la canule C légèrement en retrait (1 ou 2 mm) de son extrémité de manière à enserrer celle-ci (voir en particulier la figure 8).

Le support 300 comprend six paires de perçages 331, 332 de telle manière que :
- chaque perçage 331 ait une extrémité débouchant à l'extérieur de la couronne externe 321 entre les deuxièmes extrémités 352 d'une paire de bras 350 et une extrémité débouchant à l'intérieur de la couronne externe 322 entre deux lames élastiques 323 ;
- chaque perçage 332 ait une extrémité débouchant à l'intérieur de la couronne externe 321 entre deux lames élastiques 323 en regard de l'extrémité du perçage 331 correspondant et une extrémité débouchant à l'intérieur de la couronne interne 322 ;
- les débouchés des perçages 332 soient symétriquement répartis à l'intérieur de la couronne interne 322.

Le miroir secondaire 200 est reçu dans la couronne interne 322 avec un jeu radial d'environ 0,25 mm et est collé dans celle-ci au moyen d'une colle structurale. Le positionnement des paires de perçages 331, 332 permet une répartition homogène de la colle autour du miroir secondaire 200. Le faible jeu entre la surface intérieure de la couronne interne 322 et la surface périphérique 204 du miroir secondaire 200 permet, d'une part, de régler en position (inclinaison et coaxialité) le miroir secondaire 200 par rapport à l'axe du miroir primaire 100 et, d'autre part, de limiter l'épaisseur de colle s'étendant entre ces deux surfaces. Avoir une relativement faible épaisseur permet de limiter les contraintes que la colle peut exercer sur le miroir secondaire 200 du fait d'une variation thermique. La colle utilisée est ici une colle époxy et, par exemple, celle de marque 3M portant la référence DP490. On notera que la couronne externe 321 comprend une surface interne pourvue d'un évidement annulaire 324 pour ne pas interférer avec le miroir secondaire 200 lors des opérations de réglage de la position dudit miroir secondaire 200.

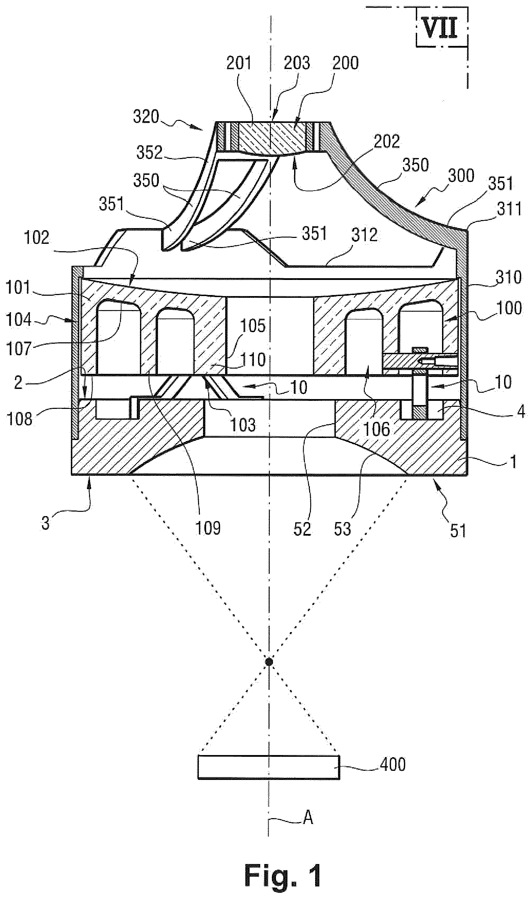

La platine 1 a une forme de révolution autour d'un axe central colinéaire à l'axe optique du télescope et comprend une face avant 2 faisant face à la face de fixation 103 du miroir primaire 100 et, à l'opposé de ce dernier, une surface arrière portant la référence générale 3 sur la figure 1.

La face avant 2 est pourvue d'une rainure 4 de forme circulaire centrée sur l'axe central de la platine de fixation 1. La rainure 4 a un fond plat sur lequel sont fixés des éléments de fixation 10 ayant chacun une base 11 reposant à plat sur le fond de la rainure 4 et, à l'opposé de la base 11, un palier 12 qui s'étend en saillie de la face avant 2. Le palier 12 est relié à la base 11 par deux biellettes 13 agencées en triangle avec la base 11. Les biellettes 13 sont en une seule pièce avec le palier 12 et la base 11.

Les éléments de fixation 10 sont au nombre de trois disposés à 120° les uns des autres symétriquement par rapport à l'axe central.

Le palier 12 de chaque élément de fixation 10 est logé dans la rainure 107 entre la portion annulaire externe 108 et la portion annulaire intermédiaire 109.

Chaque palier 12 reçoit un troisième tronçon 23 d'un axe, généralement désigné en 20 sur les figures, ayant un premier tronçon 21 et un deuxième tronçon 22 reçus respectivement dans un premier perçage 38 et un deuxième perçage 39 qui sont ménagés dans la portion annulaire externe 108 et la portion annulaire intermédiaire 109. Les perçages 38 et 39 sont débouchant.

Le deuxième tronçon 22 a un diamètre inférieur au troisième tronçon 23 et est relié à celui-ci par un épaulement formant une butée à l'enfoncement du deuxième tronçon 22 dans le deuxième perçage 39. Le premier tronçon 21 a un diamètre supérieur au troisième tronçon 23.

Le premier tronçon 21 et le deuxième tronçon 22 sont collés respectivement dans le premier perçage 38 et le deuxième perçage 39 au moyen d'une colle structurale anaérobie. La colle utilisée est plus particulièrement celle de marque LOCTITE portant la référence 638. Il est intéressant qu'un espace le plus faible possible soit laissé entre la surface externe des tronçons 21 et 22 d'une part et la surface interne des perçages 38, 39. L'espace le plus faible possible doit être suffisant pour permettre le glissement relatif des deux surfaces avant collage et admettre une quantité de colle juste suffisante pour fixer les deux surfaces l'une à l'autre compte tenu des efforts à supporter. La fluidité de la colle influe sur le dimensionnement de cet espace puisque plus la colle est fluide et plus l'espace peut avoir une faible épaisseur. Il est entendu qu'on cherche à minimiser cette épaisseur et donc la quantité de colle pour que, en cas de variation de température, la colle n'engendre pas sur le miroir primaire 100 de contraintes susceptibles de le déformer.

L'axe 20 est pourvu d'un canal central 25 ayant :
- une première extrémité débouchant sur face terminale 26 de l'axe 20 formant une partie de l'axe 20 accessible lorsque l'axe 20 est en position dans les perçages 38, 39 pour recevoir une extrémité d'une canule C d'injection de colle ;
- une deuxième extrémité débouchant dans au moins un canal transversal 27 dont les deux extrémités débouchent en des points diamétralement opposés sur une surface externe du troisième tronçon 23.

Le troisième tronçon 23 est reçu dans le palier 12 avec un ajustement glissant. L'ajustement glissant est ici de type H7g6 mais pourrait être de type H7g5 ou tout autre ajustement glissant laissant un espace le plus faible possible entre la surface externe du troisième tronçon 23 et la surface interne du palier 12. Le troisième tronçon 23 est collé dans le palier 12 au moyen d'une colle structurale injectée dans le canal central 25 puis le canal transversal 27 au moyen de la canule C introduite dans un tronçon d'entrée du canal central 25 débouchant sur la face terminale 26. La colle utilisée est plus particulièrement une colle structurale époxy et par exemple celle de marque 3M portant la référence DP490. L'espace le plus faible possible laissé entre la surface externe du troisième tronçon 23 et la surface interne du palier 12 doit être suffisant pour permettre le glissement relatif des deux surfaces avant collage et admettre une quantité de colle juste suffisante pour fixer les deux surfaces l'une à l'autre compte tenu des efforts à supporter. La fluidité de la colle influe sur cet espace puisque plus la colle est fluide et plus l'espace peut avoir une faible épaisseur. Il est entendu qu'on cherche à minimiser cette épaisseur et donc la quantité de colle pour que, en cas de variation de température, la colle n'engendre pas sur le miroir primaire 100 de contraintes susceptibles de le déformer.

Chacun des perçages 39 débouche du côté de la rainure annulaire 107 dans un évidement 40 ménagé dans la portion annulaire intermédiaire 109 pour éviter un contact entre le palier 12 et une surface de la portion annulaire intermédiaire 109.

On notera que les biellettes 13 sont agencées pour assurer un découplage mécanique du miroir primaire 100 et de la platine de fixation 1 de manière à supporter le miroir primaire 100 tout en limitant la création de contraintes mécaniques dans le miroir primaire 100. A cette fin, les biellettes 13 comprennent des parties d'épaisseur réduite selon une direction perpendiculaire à l'axe optique et à leur axe longitudinal de telle manière que les biellettes soient plus rigides sous des efforts parallèles à l'axe optique A que sous des efforts perpendiculaires à l'axe optique A et à leur axe longitudinal.

L'assemblage des miroirs 100 et 200, du support 300 et de la platine 1 est réalisé comme suit.

La base 11 de chaque élément de fixation 10 est d'abord fixée à la platine 1 au moyen d'éléments vissés non visibles sur les figures. Le miroir 100 est ensuite fixé aux éléments de fixation 10. Pour ce faire, les paliers 12 sont engagés dans la rainure 107 et chaque axe 20 est engagé successivement dans le perçage 38, le palier 12 et le perçage 39 après que la colle structurale anaérobie a été déposée sur le premier tronçon 21 et le deuxième tronçon 22. La colle structurale époxy est ensuite introduite entre la surface interne du palier 12 et la surface externe du troisième tronçon 23 via le canal central 25 puis le canal transversal 27.

Le support 300 est ensuite collé sur la platine 1 puis le miroir secondaire 200 est collé au support 300 comme indiqué plus haut.

La surface arrière 3 de la platine de fixation 1 comporte des références de positionnement du télescope par rapport à un ensemble de capture d'image symbolisé en 400 sur la figure 1 disposé en regard de la face arrière 3. L'ensemble de capture d'image 400 comprend un capteur et éventuellement une ou plusieurs lentilles montées en avant du capteur.

Les références de positionnement sont obtenues par un usinage de qualité optique et comprennent :
- une face annulaire 51 centrée sur l'axe optique du télescope et perpendiculaire à l'axe optique du télescope pour former une référence d'inclinaison,
- un alésage central 52 pour former une référence de centrage,
- une portion de surface concave 53 en calotte sphérique ayant un centre sur l'axe optique pour définir une distance du capteur par rapport au miroir secondaire 200.

Le capteur est positionné parallèlement à la surface arrière 3 et de façon à ce que le point focal défini par la portion de surface concave 53 coïncide avec celui du capteur.

En outre, la surface réfléchissante du miroir secondaire 200 comprend une portion centrale pourvue d'au moins une gravure 210 de centrage du miroir secondaire 200 par rapport au miroir primaire 100. La gravure 210 est en forme d'anneau centrée sur un axe optique du miroir secondaire.

Le réglage du positionnement du miroir secondaire 200 par rapport au miroir primaire 100 est réalisé, avant le collage, par interférométrie optique entre les surfaces 202 et 102, en déplaçant le miroir secondaire 200 à l'aide de micro-actionneurs.

Bien entendu, l'invention n'est pas limitée aux modes de réalisation décrits mais englobe toute variante entrant dans le champ de l'invention telle que définie par les revendications.

En particulier, bien que tous les composants du télescope soient ici en aluminium pour limiter les dilatations différentielles, il est possible de constituer le télescope avec des matériaux différents mais ayant des coefficients de dilatation homogènes pour limiter les contraintes sur les composants risquant de provoquer un déplacement relatif des miroirs ou une déformation de ceux-ci...

En variante, l'axe peut être monté en porte-à-faux d'une seule portion arrière du miroir primaire.

Bien que le télescope de l'invention soit extrêmement performant lorsque les quatre caractéristiques de l'invention sont combinées comme dans le mode de réalisation décrit, les quatre caractéristiques sont indépendantes les unes des autres et il est possible de réaliser l'invention en utilisant la première caractéristique seule ou en combinaison avec une ou deux autres des caractéristiques restantes.

Bien qu'ici le moyen de découplage mécanique du miroir secondaire 200 vis-à-vis du miroir primaire 100 soit procuré par l'agencement de la couronne secondaire 320 en deux couronnes 321, 322 reliées l'une à l'autre par des lames élastiques 323, d'autres modes de réalisation de ce moyen de découplage mécanique sont envisageables. En particulier, un moyen de découplage mécanique, comme une lame élastique, pourrait être interposé entre chaque première extrémité 351 de bras 350 et la couronne primaire 310.

Le miroir secondaire peut être fixé à la couronne secondaire de manière différente de celle décrite.

Le canal transversal 27 peut n'avoir qu'une extrémité débouchant sur la surface externe du troisième tronçon 23 et il peut y avoir plusieurs canaux transversaux 27, par exemple trois à 120° les uns des autres.

Les bras pourraient avoir une autre forme que celle décrite et ne présenter par qu'une ou deux des caractéristiques suivantes :
- les bras ont une première extrémité adjacente à la couronne primaire et une deuxième extrémité adjacente à la couronne secondaire, la première extrémité s'étendant radialement par rapport à la couronne primaire et la deuxième extrémité s'étendant tangentiellement par rapport à la couronne secondaire ;
- les bras sont incurvés vers le miroir primaire ;
- chaque bras a une section transversale qui varie entre les extrémités de telle manière que, pour un effort donné générant des contraintes dans le bras, les contraintes sont réparties de manière équivalente le long du bras.

La fixation du miroir primaire sur la platine peut être réalisée différemment. Les éléments de fixation 10 peuvent avoir une forme différente de celle décrite et le nombre d'éléments de fixation 10 peut être différent de trois. Chaque élément de fixation peut être en plusieurs pièces.

La couronne primaire peut être fixée différemment sur la platine, par exemple collée.

La face arrière de la platine peut ne pas comprendre de références de positionnement ou bien une partie seulement de celles-ci.

L'invention est applicable à d'autres types de télescope et par exemple un télescope de type Schmidt Cassegrain.

## Revendications

1. Télescope comprenant une platine de fixation(1), un miroir primaire (100) porté par une face avant (2) de la platine, et un miroir secondaire (200) maintenu en regard du miroir primaire par un support (300), **caractérisé en ce que** le miroir primaire est relié à la platine par des éléments de fixation (10) ayant chacun une base (11) fixée à la platine et, à l'opposé de la base, un palier (12) qui est logé entre une première portion arrière (108) et une deuxième portion arrière (109) du miroir primaire et qui reçoit un troisième tronçon (23) d'un axe (20) ayant un premier tronçon (21) et un deuxième tronçon (22) reçus respectivement dans un premier perçage (38) et un deuxième perçage (39) qui sont ménagés dans la première portion arrière et la deuxième portion arrière respectivement ; **en ce que** le troisième tronçon est reçu dans le palier avec un ajustement glissant et est collé dans le palier au moyen d'une colle structurale ; et **en ce que** l'axe est pourvu d'un canal central (25) ayant une première extrémité débouchant sur une partie (26) de l'axe accessible lorsque l'axe est en position dans les perçages pour recevoir une extrémité d'une canule d'injection de colle et une deuxième extrémité débouchant dans au moins un canal transversal (27) dont au moins une extrémité débouche sur une surface externe du troisième tronçon.

2. Télescope selon la revendication 1, dans lequel le deuxième tronçon (22) a un diamètre inférieur au troisième tronçon (23) et est relié à celui-ci par un épaulement formant une butée à l'enfoncement du deuxième tronçon dans le deuxième perçage (39).

3. Télescope selon la revendication 2, dans lequel le deuxième perçage (39) est traversant.

4. Télescope selon la revendication 2, dans lequel le premier tronçon (21) a un diamètre supérieur au troisième tronçon (23).

5. Télescope selon l'une quelconque des revendications précédentes, dans lequel la deuxième portion (22) comprend un évidement (40) en regard du palier (12) pour éviter un contact entre le palier et la deuxième portion (109).

6. Télescope selon l'une quelconque des revendications précédentes, dans lequel l'ajustement est glissant.

7. Télescope selon l'une quelconque des revendications précédentes, dans lequel les première et deuxième portions (108, 109) sont séparées l'une de l'autre par un tronçon d'une rainure circulaire (107) centrée sur un axe optique du télescope.

8. Télescope selon l'une quelconque des revendications précédentes, dans lequel le support (300) comprend une couronne primaire (310) montée autour du miroir primaire (100), une couronne secondaire (320) montée autour du miroir secondaire (200), et des bras (350) reliant la couronne secondaire à la couronne primaire.

9. Télescope selon la revendication 8, dans lequel la couronne primaire (310) a un bord (311) s'étendant en saillie du miroir primaire (100) du côté du miroir secondaire et le bord est pourvu d'échancrures (312).

10. Télescope selon la revendication 8 ou la revendication 9, dans lequel le support (300) comprend un moyen de découplage mécanique du miroir secondaire (200) vis-à-vis du miroir primaire (100).

11. Télescope selon la revendication 10, dans lequel la couronne secondaire (320) comprend une couronne externe (321) et une couronne interne (322) coaxiale à la couronne externe et reliée à celle-ci par des éléments de découplage mécanique (323) symétriquement répartis.

12. Télescope selon la revendication 11, dans lequel le miroir secondaire (200) est reçu avec jeu dans la couronne interne (322) et est collé dans celle-ci au moyen d'une colle structurale ; la couronne externe (321) comprenant des troisièmes perçages (331) traversant et la couronne interne comprenant des quatrièmes perçages (332) traversant sensiblement alignés avec les troisièmes perçages pour permettre l'introduction d'une canule d'injection de colle.

13. Télescope selon la revendication 12, dans lequel le quatrième perçage (332) est étagé pour former une butée à l'enfoncement de la canule dans le quatrième perçage et le quatrième perçage est agencé pour permettre une liaison étanche avec la canule.

14. Télescope selon l'une quelconque des revendications 8 à 13, dans lequel les bras (350) ont une première extrémité (351) adjacente à la couronne primaire (310) et une deuxième extrémité (352) adjacente à la couronne secondaire (320), la première extrémité s'étendant sensiblement radialement par rapport à la couronne primaire et la deuxième extrémité se raccordant sensiblement tangentiellement à la couronne secondaire.

15. Télescope selon l'une quelconque des revendications 8 à 14, dans lequel les bras (350) sont incurvés vers le miroir primaire (100).

16. Télescope selon l'une quelconque des revendications 8 à 15, dans lequel chaque bras (350) a une section transversale qui varie entre les extrémités (351, 352) de telle manière que, pour un effort donné générant des contraintes dans le bras, les contraintes sont réparties de manière équivalente le long du bras.

17. Télescope selon l'une quelconque des revendications 8 à 16, dans lequel : les bras (350) ont une première extrémité (351) adjacente à la couronne primaire (310) et une deuxième extrémité (352) adjacente à la couronne secondaire (320), la première extrémité s'étendant radialement par rapport à la couronne primaire et la deuxième extrémité s'étendant tangentiellement par rapport à la couronne secondaire ; les bras sont incurvés vers le miroir primaire ; et chaque bras a une section transversale qui varie entre les extrémités de telle manière que, pour un effort donné générant des contraintes dans le bras, les contraintes sont réparties de manière équivalente le long du bras.

18. Télescope selon l'une quelconque des revendications précédentes, dans lequel le télescope est de type Cassegrain et la platine (1) a une surface arrière (3) comportant des références de positionnement du télescope par rapport à un dispositif de capture d'image (400) disposé en regard de la face arrière.

19. Télescope selon la revendication 18, dans lequel les références de positionnement sont obtenues par un usinage de qualité optique et comprennent une face (51) perpendiculaire à un axe optique du télescope pour former une référence d'inclinaison, un alésage central (52) pour former une référence de centrage et une surface concave (53) en calotte sphérique ayant un centre sur l'axe optique pour définir une distance du dispositif de capture d'image (400) par rapport au miroir secondaire (200).

20. Télescope selon la revendication 18 ou la revendication 19, dans lequel le miroir secondaire (200) comprend en regard du miroir primaire (100) une portion centrale pourvue d'au moins une gravure de centrage du miroir secondaire par rapport au miroir primaire.

21. Télescope selon la revendication 20, dans lequel la gravure est en forme d'anneau centrée sur un axe optique du miroir secondaire (200).

22. Télescope selon l'une quelconque des revendications précédentes, dans lequel le palier (12) est relié à la base par deux biellettes (13) agencées en triangle avec la base (11).

23. Télescope selon la revendication 22, dans lequel les biellettes (13) sont en une seule pièce avec le palier (12) et la base (11) et les biellettes sont agencées pour assurer un découplage mécanique du miroir primaire (100) et de la platine (1) de manière à supporter le miroir primaire tout en limitant la création de contraintes mécaniques dans le miroir primaire.

## Patentansprüche

1. Teleskop, umfassend eine Befestigungsplatte (1), einen primären Spiegel (100), der von einer Vorderseite (2) der Platte getragen wird, und einen sekundären Spiegel (200), der von einem Träger (300) gegenüber dem primären Spiegel gehalten wird, **dadurch gekennzeichnet, dass** der primäre Spiegel mit der Platte über Befestigungselemente (10) verbunden ist, die jeweils eine Basis (11) haben, die an der Platte befestigt ist, sowie entgegengesetzt zur Basis ein Lager (12), das zwischen einem ersten hinteren Teil (108) und einem zweiten hinteren Teil (109) des primären Spiegels untergebracht ist und einen dritten Abschnitt (23) eines Achsbolzens (20) aufnimmt, der einen ersten Abschnitt (21) und einen zweiten Abschnitt (22) hat, die in einer ersten Bohrung (38) bzw. einer zweiten Bohrung (39) aufgenommen sind, die in dem ersten hinteren Teil bzw. dem zweiten hinteren Teil ausgebildet sind; dass der dritte Abschnitt in dem Lager mit einer Gleitpassung aufgenommen und in das Lager mittels eines Strukturklebstoffs geklebt ist; und dass der Achsbolzen mit einem zentralen Kanal (25) versehen ist, der ein erstes Ende hat, das auf einem Teil (26) des Achsbolzens mündet, der zugänglich ist, wenn der Achsbolzen in einer Position in den Bohrungen ist, um ein Ende einer Klebstoffeinspritzkanüle aufzunehmen, sowie ein zweites Ende, das in mindestens einen Querkanal (27) mündet, von dem mindestens ein Ende auf einer Außenfläche des dritten Abschnitts mündet.

2. Teleskop nach Anspruch 1, bei dem der zweite Abschnitt (22) einen Durchmesser hat, der kleiner als der dritte Abschnitt (23) und mit diesem über eine Schulter verbunden ist, die einen Anschlag entgegen dem Eindrücken des zweiten Abschnittes in die zweite Bohrung (39) bildet.

3. Teleskop nach Anspruch 2, bei dem die zweite Bohrung (39) eine durchgehende Bohrung ist.

4. Teleskop nach Anspruch 2, bei dem der erste Abschnitt (21) einen Durchmesser hat, der größer als der dritte Abschnitt (23) ist.

5. Teleskop nach einem der vorhergehenden Ansprüche, bei dem der zweite Teil (22) eine Aussparung (40) gegenüber dem Lager (12) hat, um einen Kontakt zwischen dem Lager und dem zweiten Teil (109) zu verhindern.

6. Teleskop nach einem der vorhergehenden Ansprüche, bei dem die Passung gleitend ist.

7. Teleskop nach einem der vorhergehenden Ansprüche, bei dem der erste und zweite Teil (108, 109) voneinander um einen Abschnitt einer kreisförmigen Nut (107) getrennt sind, die auf eine optische Achse des Teleskops zentriert ist.

8. Teleskop nach einem der vorhergehenden Ansprüche, bei dem der Träger (300) einen primären Kranz (310) umfasst, der um den primären Spiegel (100) montiert ist, einen sekundären Kranz (320), der um den sekundären Spiegel (200) montiert ist, und Arme (350), die den sekundären Kranz mit dem primären Kranz verbinden.

9. Teleskop nach Anspruch 8, bei dem der primäre Kranz (310) einen Rand (311) hat, der von dem primären Spiegel (100) in Richtung des sekundären Spiegels vorsteht, und der Rand mit Einkerbungen (312) versehen ist.

10. Teleskop nach Anspruch 8 oder Anspruch 9, bei dem der Träger (300) ein Mittel zur mechanischen Entkopplung des sekundären Spiegels (200) in Bezug auf den primären Spiegel (100) umfasst.

11. Teleskop nach Anspruch 10, bei dem der sekundäre Kranz (320) einen äußeren Kranz (321) und einen inneren Kranz (322) umfasst, der koaxial zum äußeren Kranz und mit diesem über symmetrisch verteilte Elemente (323) zur mechanischen Entkopplung verbunden ist.

12. Teleskop nach Anspruch 11, bei dem der sekundäre Spiegel (200) mit Spiel in dem inneren Kranz (322) aufgenommen und in diesen mittels eines Strukturklebstoffs geklebt ist; wobei der äußere Kranz (321) dritte Durchgangsbohrungen (331) umfasst und der innere Kranz vierte Durchgangsbohrungen (332) umfasst, die im Wesentlichen mit den dritten Bohrungen ausgerichtet sind, um das Einführen einer Klebstoffeinspritzkanüle zu ermöglichen.

13. Teleskop nach Anspruch 12, bei dem die vierte Bohrung (332) gestuft ist, um einen Anschlag entgegen dem Eindrücken der Kanüle in die vierte Bohrung zu bilden, und die vierte Bohrung angeordnet ist, um eine dichte Verbindung mit der Kanüle zu ermöglichen.

14. Teleskop nach einem der Ansprüche 8 bis 13, bei dem die Arme (350) ein erstes Ende (351) haben, das an den primären Kranz (310) angrenzt, sowie ein zweites Ende (352), das an den sekundären Kranz (320) angrenzt, wobei sich das erste Ende im Wesentlichen radial in Bezug auf den primären Kranz erstreckt und sich das zweite Ende im Wesentlichen tangential an den sekundären Kranz anschließt.

15. Teleskop nach einem der Ansprüche 8 bis 14, bei dem die Arme (350) in Richtung des primären Spiegels (100) gebogen sind.

16. Teleskop nach einem der Ansprüche 8 bis 15, bei dem jeder Arm (350) einen Querschnitt hat, der zwischen den Enden (351, 352) derart variiert, dass für eine gegebene Kraft, die Spannungen in dem Arm erzeugt, die Spannungen gleichwertig entlang des Arms verteilt sind.

17. Teleskop nach einem der Ansprüche 8 bis 16, bei dem: die Arme (350) ein erstes Ende (351) haben, das an den primären Kranz (310) angrenzt, sowie ein zweites Ende (352), das an den sekundären Kranz (320) angrenzt, wobei sich das erste Ende radial in Bezug auf den primären Kranz erstreckt und sich das zweite Ende tangential in Bezug auf den sekundären Kranz erstreckt; wobei die Arme in Richtung des primären Spiegels gebogen sind; und wobei jeder Arm einen Querschnitt hat, der zwischen den Enden derart variiert, dass für eine gegebene Kraft, die in dem Arm Spannungen erzeugt, die Spannungen gleichwertig entlang des Arms verteilt sind.

18. Teleskop nach einem der vorhergehenden Ansprüche, bei dem das Teleskop vom Typ Cassegrain ist und die Platte (1) eine Rückfläche (3) hat, die Positionierungsreferenzen zur Positionierung des Teleskops in Bezug auf eine Bildaufnahmevorrichtung (400) hat, die gegenüber der Rückseite angeordnet ist.

19. Teleskop nach Anspruch 18, bei dem die Positionierungsreferenzen durch eine optische Qualitätsbearbeitung erhalten werden und eine Fläche (51) umfassen, die senkrecht zu einer optischen Achse des Teleskops ist, um eine Neigungsreferenz zu bilden, eine zentrale Bohrung (52), um eine Zentrierungsreferenz zu bilden, und eine konkave Fläche (53) in Form einer kugelförmigen Kalotte, die ein Zentrum auf der optischen Achse hat, um einen Abstand der Bildaufnahmevorrichtung (400) in Bezug auf den sekundären Spiegel (200) zu definieren.

20. Teleskop nach Anspruch 18 oder Anspruch 19, bei dem der sekundäre Spiegel (200) gegenüber dem primären Spiegel (100) einen zentralen Teil hat, der mit mindestens einer Zentrierungsgravur zur Zentrierung des sekundären Spiegels in Bezug auf den primären Spiegel versehen ist.

21. Teleskop nach Anspruch 20, bei dem die Gravur in Form eines Ringes ist, der auf eine optische Achse des sekundären Spiegels (200) zentriert ist.

22. Teleskop nach einem der vorhergehenden Ansprüche, bei dem das Lager (12) mit der Basis über zwei kleine Stangen (13) verbunden ist, die mit der Basis (11) als Dreieck angeordnet sind.

23. Teleskop nach Anspruch 22, bei dem die kleinen Stangen (13) einstückig mit dem Lager (12) und der Basis (11) ausgebildet sind, und die kleinen Stangen so angeordnet sind, dass sie eine mechanische Entkopplung des primären Spiegels (100) und der Platte (1) derart sicherzustellen, dass der primäre Spiegel getragen wird, während die Erzeugung von mechanischen Spannungen in dem primären Spiegel begrenzt ist.

## Claims

1. A telescope comprising a fastener plate (1), a primary mirror (100) carried by a front face (2) of the plate, and a secondary mirror (200) held facing the primary mirror by a support (300), the telescope being **characterized in that** the primary mirror is connected to the plate by fastener elements (10), each having a base (11) fastened to the plate and, opposite from the base, a bearing (12) that is positioned between first and second rear portions (108 and 109) of the primary mirror and that itself receives a third segment (23) of a pin (20) also having first and second segments (21 and 22) that are received respectively in first and second holes (38 and 39) that are formed respectively in the first and second rear portions; **in that** the third segment is received in the bearing as a sliding fit and is adhesively bonded in the bearing by means of a structural adhesive; and **in that** the pin is provided with a central channel (25) having a first end opening out into a portion (26) of the pin that is accessible when the pin is in position in the holes in order to receive one end of a cannula for injecting adhesive, and a second end opening out at least into a transverse channel (27) having at least one end opening out into the outside surface of the third segment.

2. A telescope according to claim 1, wherein the second segment (22) is of diameter that is smaller than the third segment (23) and it is connected thereto via a shoulder that forms an abutment against pushing the second segment into the second hole (39).

3. A telescope according to claim 2, wherein the second hole (39) is a through hole.

4. A telescope according to claim 2, wherein the first segment (21) has a diameter greater than the third segment (23).

5. A telescope according to any preceding claim wherein the second portion (22) includes a recess (40) facing the bearing (12) in order to avoid any contact between the bearing and the second portion (109).

6. A telescope according to any preceding claim wherein the fit is a sliding fit.

7. A telescope according to any preceding claim wherein the first and second portions (108, 109) are separated from each other by a segment of a circular groove (107) centered on the optical axis of the telescope.

8. A telescope according to any preceding claim wherein the support (300) comprises a primary sleeve (310) mounted around the primary mirror (100), a secondary sleeve (320) mounted around the secondary mirror (200), and arms (350) connecting the secondary sleeve to the primary sleeve.

9. A telescope according to claim 8, wherein the primary sleeve (310) has an edge (311) projecting from the primary mirror (100) towards the secondary mirror, and the edge is provided with notches (312).

10. A telescope according to claim 8 or claim 9, wherein the support (300) includes mechanical decoupling means for decoupling the secondary mirror (200) relative to the primary mirror (100).

11. A telescope according to claim 10, wherein the secondary sleeve (320) comprises an outer sleeve (321) and an inner sleeve (322) coaxial with the outer sleeve and connected thereto by symmetrically distributed mechanical decoupling elements (323).

12. A telescope according to claim 11, wherein the secondary mirror (200) is received with clearance in the inner sleeve (322) and is adhesively bonded thereto by means of a structural adhesive; the outer sleeve (321) including third holes (331) and the inner ring including fourth holes (332), which third and fourth holes are through holes that are substantially in alignment to permit the insertion of a cannula for injecting adhesive.

13. A telescope according to claim 12, wherein the fourth hole (332) is stepped so as to form an abutment against pushing the cannula into the fourth hole, and the fourth hole is arranged to provide a leaktight connection with the cannula.

14. A telescope according to any one of claims 8 to 13, wherein each arm (350) has a first end (351) adjacent to the primary sleeve (310) and a second end (352) adjacent to the secondary sleeve (320), the first end extending substantially radially relative to the primary sleeve and the second end connecting substantially tangentially to the secondary sleeve.

15. A telescope according to any one of claims 8 to 14, wherein the arms (350) are curved towards the primary mirror (100).

16. A telescope according to any one of claims 8 to 15, wherein each arm (350) is of cross-section that varies between its ends (351, 352) in such a manner that, for a given force generating stresses in the arm, the stresses are distributed in equivalent manner along the arm.

17. A telescope according to any one of claims 8 to 16, wherein: each arm (350) has a first end (351) adjacent to the primary sleeve (310) and a second end (352) adjacent to the secondary sleeve (320), the first end extending radially relative to the primary sleeve and the second end extending tangentially relative to the secondary sleeve; the arms are curved towards the primary mirror; and each arm is of cross-section that varies between its ends in such a manner that, for a given force generating stresses in the arm, the stresses are distributed in equivalent manner along the arm.

18. A telescope according to any preceding claim wherein the telescope is of the Cassegrain type and the plate (1) has a rear surface (3) including positioning references for positioning the telescope relative to an image capture device (400) arranged facing the rear face.

19. A telescope according to claim 18, wherein the positioning references are obtained by optical quality machining and comprise a face (51) perpendicular to the optical axis of the telescope in order to form a tilt reference, a central bore (52) in order to form a centering reference, and a concave surface (53) in the form of a spherical cap having a center on the optical axis in order to define a distance for the image capture device (400) relative to the secondary mirror (200).

20. A telescope according to claim 18 or claim 19, wherein the secondary mirror (200) includes a central portion facing the primary mirror (100), which central portion is provided with at least one centering mark for centering the secondary mirror relative to the primary mirror.

21. A telescope according to claim 20, wherein the mark is in the form of a ring centered on the optical axis of the secondary mirror (200).

22. A telescope according to any preceding claim wherein the bearing (12) is connected to the base by two connecting rods (13) arranged to form a triangle together with the base (11).

23. A telescope according to claim 22, wherein the connecting rods (13) are made integrally with the bearing (12) and with the base (11), and the connecting rods are arranged to provide mechanical decoupling between the primary mirror (100) and the plate (1) in such a manner as to support the primary mirror, while limiting the creation of any mechanical stresses in the primary mirror.
